# EUROPÄISCHE PATENTSCHRIFT

(11) **EP 2 337 715 B1**
(45) Veröffentlichungstag und Bekanntmachung des Hinweises auf die Patenterteilung: **25.03.2020**
(21) Anmeldenummer: 09782171.4
(22) Anmeldetag: 25.08.2009
(51) Int. Cl.: B60T 1/10, B60T 7/12, B60T 8/17, B60W 30/16

(54) **VERFAHREN ZUM BETRIEB EINES BREMSSYSTEMS IN EINEM FAHRZEUG**
METHOD FOR OPERATING A BRAKE SYSTEM IN A VEHICLE
PROCÉDÉ D ACTIONNEMENT D UN SYSTÈME DE FREINAGE DANS UN VÉHICULE

(30) Priorität: 01.10.2008 DE 102008042530
(43) Veröffentlichungstag der Anmeldung: 29.06.2011
(73) Patentinhaber: Robert Bosch GmbH, 70442 Stuttgart (DE)
(72) Erfinder: MEDER, Klaus, 71640 Ludwigsburg (DE)
(86) Internationale Anmeldenummer: PCT/EP2009/060941
(87) Internationale Veröffentlichungsnummer: WO 2010/037597

(56) Entgegenhaltungen:
- EP-A- 0 361 708
- EP-A- 1 792 797
- GB-A- 1 074 051
- US-A1- 2008 234 909

## Beschreibung

Die Erfindung bezieht sich auf ein Fahrzeug mit einem Bremssystem nach dem Oberbegriff des Anspruches 1.

### Stand der Technik

Bremssysteme in Fahrzeugen, die mit einem Hybridantrieb versehen sind, bestehend aus einem Verbrennungsmotor und einem Elektromotor, weisen üblicherweise an einer Fahrzeugachse eine Bremseinrichtung mit mechanischem Durchgriff des Bremspedals zur Bremseinheit auf, wohingegen an der anderen Fahrzeugachse eine elektronisch ansteuerbare, sogenannte by-wire-Bremseinrichtung angeordnet ist, die allein über Stellsignale eines Regel- bzw. Steuergerätes eingestellt wird. An der Achse mit der elektronisch ansteuerbaren Bremseinrichtung wirkt in der Regel auch der elektrische Antriebsmotor, welcher Teil des Hybridantriebs ist. Wird das Fahrzeug abgebremst, so wird der Elektromotor zur Bremsenergie-Rekuperation in den Generatorbetrieb geschaltet, in welchem der erzeugte Strom des Elektromotors zum Laden der dem Elektromotor zugeordneten Batterie verwendet wird. Das hierbei entstehende zusätzliche Bremsmoment muss bei der Erzeugung eines Sollbremsmoments berücksichtigt werden, das vom Fahrers vorgegeben wird. Die Überlagerung bzw. Verblendung des aus dem Generatorbetrieb entstehenden Bremsmomentes mit dem Bremsmoment an der Fahrzeugachse, an der der Elektromotor wirksam ist, setzt eine Aktivierung mit entsprechender Druckbereitstellung an der elektronisch ansteuerbaren Bremseinrichtung voraus, was mit einer entsprechenden Bauteilbelastung an dieser Bremse einhergeht.

Die EP 1 792 797 A1 offenbart ein Bremssystem in einem Fahrzeug mit einer ersten Bremseinrichtung an einer ersten Fahrzeugachse und einer zweiten Bremseinrichtung an einer zweiten Fahrzeugachse. Nach einem Stillstand des Kraftfahrzeugs wird das gesamte Bremsmoment über die angetriebene Achse aufgebracht. Hierdurch soll ein Verspannen der Karosserie über gegenläufige Antriebs- und Bremsmomente vermieden werden. Falls die Bremskraft an der gebremsten Achse nicht ausreicht, um das Fahrzeug im Stillstand zu halten, wird zusätzlich auch die Bremseinrichtung an der zweiten Achse betätigt.

Die EP 0 361 708 A2 zeigt ein Fahrzeug mit elektromotorischem Antrieb und einem hydraulischen Bremssystem, das mit einer Regenerationseinheit ausgestattet ist. Die Regenerationseinheit umfasst einen Akkumulator, der zum Zwischenspeichern von Hydraulikfluid des Bremssystems dient.

Ergänzend wird zum Stand der Technik auf die US 2008/0234909 A1 und GB 1 074 051 verwiesen.

### Offenbarung der Erfindung

Der Erfindung liegt die Aufgabe zugrunde, die Betriebsdauer bzw. Standfestigkeit eines Fahrzeug-Bremssystems zu verbessern, das eine erste Bremseinrichtung mit mechanischem Durchgriff des Bremspedals und darüber hinaus eine zweite Bremseinrichtung umfasst, wobei die zweite Bremseinrichtung als by-wire-Bremseinrichtung ausgebildet sein kann.

Diese Aufgabe wird erfindungsgemäß bei einem Fahrzeug mit den Merkmalen des Anspruches 1 gelöst. Die Unteransprüche geben zweckmäßige Weiterbildungen an.

Das erfindungsgemäße Fahrzeug weist ein Bremssystem auf, wobei das Bremssystem mindestens eine erste Bremseinrichtung und eine zweite, ganz oder teilweise unabhängige Bremseinrichtung aufweist und die erste Bremseinrichtung einen unmittelbaren, mechanischen Durchgriff des Bremspedals auf die Bremseinheit der ersten Bremseinrichtung im Sinne einer herkömmlichen, mechanisch-hydraulischen Betätigung aufweist, wohingegen die zweite Bremseinrichtung vorzugsweise elektronisch ansteuerbar ist, also als by-wire-Bremse ausgeführt ist. Die Bremseinheit der elektronisch ansteuerbaren Bremseinrichtung wird über Stellsignale eingestellt, welche in einem Regel- bzw. Steuergerät als Funktion aktueller Anforderungen vom Fahrer oder eines Fahrzeugregelsystems sowie des momentanen Fahrzeugzustandes und der Umgebungsbedingungen erzeugt werden. Da die Auslegung derartiger Bremseinrichtungen hinsichtlich der Anzahl der Bremsbetätigungen bei Kosten und Gewicht hohen Einfluss hat, wird bei einem Betrieb nach dem erfindungsgemäßen Verfahren in definierten Betriebszuständen bei einer Bremsmomentanforderung an das Bremssystem des Fahrzeuges lediglich die erste, unmittelbare über das Bremspedal betätigbare Bremseinrichtung beaufschlagt, wohingehend die vorzugsweise elektronisch ansteuerbare, zweite Bremseinrichtung unbetätigt bleibt. Auf diese Weise wird die Anzahl von Bremsbetätigungen an der zweiten Bremseinrichtung reduziert und damit die Lebensdauer erhöht bzw. es kann hinsichtlich der Kosten und des Gewichts (geringere Baugröße) eine bessere Lösung erzielt werden. Die erste Bremseinrichtung mit mechanischem Durchgriff des Bremspedals unterliegt dagegen keiner Beschränkung hinsichtlich der Anzahl an Bremsbetätigungen, so dass die Verlagerung von Bremsbetätigung von der zweiten Bremseinrichtung auf die erste Bremseinrichtung mit mechanischem Durchgriff insgesamt keine negativen Auswirkungen zur Folge hat.

Die Ansteuerstrategie, lediglich eine Bremseinrichtung zu betätigen und die zweite, bevorzugt elektronisch ansteuerbare Bremseinrichtung unbetätigt zu lassen, kommt nur in Fällen in Frage, in denen eine Fahrzeug-Systemgröße einen zugeordneten Grenzwert nicht überschreitet. Bei der Fahrzeug-Systemgröße handelt es sich insbesondere um eine Fahrzeugzustandsgröße, vorzugsweise um die Fahrzeuggeschwindigkeit, die aus Sicherheitsgründen unterhalb eines niedrigen Grenzwertes von beispielsweise 5 km/h oder 10 km/h liegt, insbesondere im Stillstand, damit die ansteuerbare Bremseinrichtung auch bei einem Bremsvorgang unbetätigt bleibt und lediglich die erste Bremseinrichtung mit mechanischem Durchgriff des Bremspedals betätigt wird. Aufgrund der verhältnismäßig geringen kinetischen Energie des Fahrzeuges bei niedrigen Geschwindigkeiten kann der Bremsvorgang ohne Beeinträchtigung der Fahrsicherheit unter Weglassen der Betätigung der zweiten, bevorzugt elektronisch ansteuerbaren Bremseinrichtung durchgeführt werden.

Darüber hinaus können weitere Bedingungen formuliert werden, die alternativ und insbesondere auch kumulativ vorliegen müssen, damit der Bremsvorgang mit Aktivierung lediglich der ersten Bremseinrichtung durchgeführt wird. Hierbei kann insbesondere der Radschlupf an mindestens einem Rad betrachtet werden, wobei eine Aktivierung der erfindungsgemäßen Strategie nur in Betracht kommt, wenn der Radschlupf einen zugeordneten Grenzwert nicht überschreitet. Des Weiteren können auch Fahrzeugkenngrößen wie bestimmte Fahrzeugparameter Berücksichtigung finden, beispielsweise der Beladungszustand des Fahrzeugs, wobei die erfindungsgemäße Bremsstrategie nur durchgeführt wird, wenn der Beladungszustand insbesondere an Steigungen unterhalb eines Grenzwertes liegt.

Außerdem kommt die Berücksichtigung des Aktivierungszustandes von einem oder von mehreren Fahrzeugregelsystemen in Betracht. Ist beispielsweise ein elektronisches Stabilitätsprogramm (ESP), ein Antiblockiersystem (ABS) oder eine Traktionskontrolle (TCS) aktiv, so wird üblicherweise aus Sicherheitsgründen der Bremsvorgang auf sämtliche Räder des Fahrzeuges eingeleitet, also auch mit Aktivierung der zweiten, bevorzugt elektronisch ansteuerbaren Bremseinrichtung. Umgekehrt kommt die erfindungsgemäße Bremsstrategie zweckmäßigerweise nur in Betracht, wenn die Fahrzeugregelsysteme sich nicht in Funktion befinden.

Die Aktivierung der Bremsstrategie kann sowohl bei einem manuellen Bremseingriff durch den Fahrer als auch bei einem automatisch generierten Bremseingriff durch ein Fahrzeugregelsystem durchgeführt werden, sofern sämtliche Bedingungen für die Aktivierung der erfindungsgemäßen Bremsstrategie erfüllt sind.

Eine Beendigung der erfindungsgemäßen Bremsstrategie kommt in Betracht, wenn eine der Aktivierungsbedingungen nicht länger erfüllt ist. So kann es beispielsweise im Laufe eines Bremsvorganges mit Aktivierung nur der ersten Bremseinrichtung vorkommen, dass die Fahrzeuggeschwindigkeit die Grenzgeschwindigkeit überschreitet oder dass an einem oder an mehreren Rädern ein unzulässig hoher Radschlupf auftritt oder dass ein Fahrzeugregelsystem aktiv wird. In diesen Fällen wird die erfindungsgemäße Bremsstrategie abgebrochen und es wird zu einem regulären Bremsvorgang zurückgekehrt, bei dem beide Bremseinrichtungen aktiv sind und ein Bremsmoment erzeugen.

Das erfindungsgemäße Fahrzeug ist mit einem Hybridantrieb ausgestattet, der eine Brennkraftmaschine sowie einen elektrischen Antriebsmotor umfasst, wobei der Elektromotor an der gleichen Fahrzeugachse wie die zweite Bremseinrichtung wirksam ist. Der elektromotorische Antrieb wirkt beispielsweise auf die Hinterachse des Fahrzeuges, an der auch die bevorzugt elektronisch ansteuerbare Bremseinrichtung angeordnet ist, wohingegen an den Rädern der Vorderachse die Bremseinrichtung mit mechanischem Durchgriff des Bremspedals wirksam ist. Im Bremsbetrieb kann der elektrische Antriebsmotor zur Bremsenergie-Rekuperation in den Generatorbetrieb geschaltet werden, in welchem ein die Batterie des Elektromotors speisender Strom erzeugt wird. Hierbei generiert der Elektromotor ein zusätzliches Bremsmoment, welches dem Bremsmoment überlagert wird, das von dem Bremssystem des Fahrzeuges erzeugt wird. Das Gesamt-Bremsmoment setzt sich aus dem Bremsmoment des Elektromotors sowie dem Bremsmoment des Bremssystems im Kraftfahrzeug zusammen. Bei der erfindungsgemäßen Bremsstrategie bleibt die an der Hinterachse wirksame, vorzugsweise elektronisch ansteuerbare Bremseinrichtung unbetätigt, an dieser Achse wirkt vielmehr nur das Bremsmoment des Elektromotors. An der Vorderachse ist die erste Bremseinrichtung aktiv und erzeugt ein Bremsmoment.

Als elektronisch ansteuerbare Bremseinrichtung können beispielsweise elektrohydraulische Bremsen oder elektromotorisch betätigbare Bremsen eingesetzt werden.

Weitere Vorteile und zweckmäßige Ausführungen sind den weiteren Ansprüchen, der Figurenbeschreibung und den Zeichnungen zu entnehmen. Es zeigen:
- Fig. 1: in schematischer Darstellung ein Kraftfahrzeug mit Hybridantrieb, bestehend aus einem Verbrennungsmotor und einem Elektromotor, mit einer ersten Bremseinrichtung an der Vorderachse und einer zweiten, elektronisch ansteuerbaren Bremseinrichtung an der Hinterachse,
- Fig. 2: ein Ablaufschema zur Durchführung des Verfahrens zum Betrieb des Bremssystems.

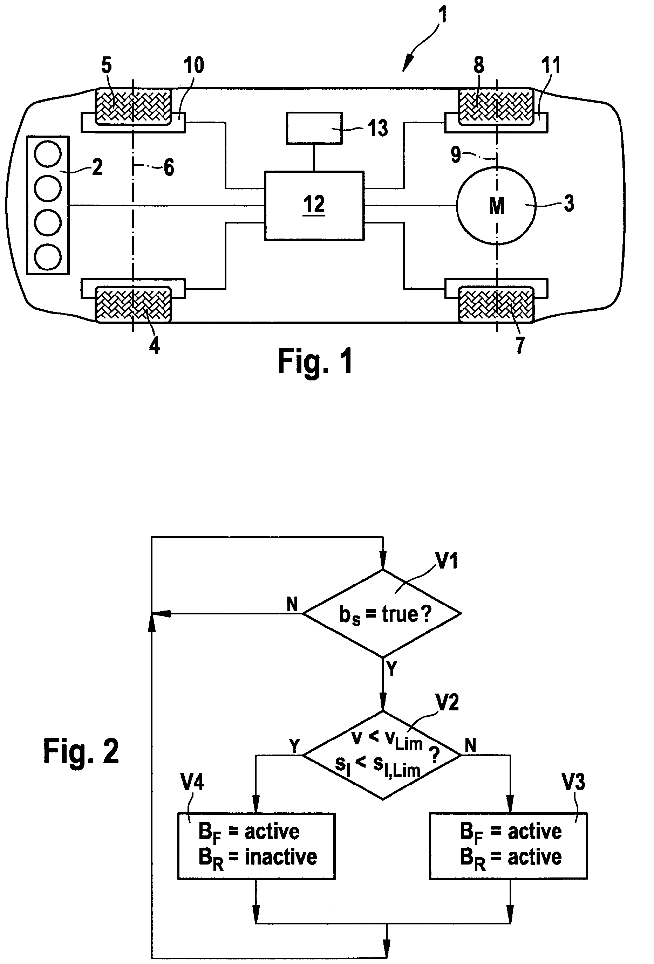

Das in Fig. 1 dargestellte Kraftfahrzeug 1 ist mit einem Hybridantrieb ausgestattet, bestehend aus einer Hubkolben-Brennkraftmaschine 2 und einem Elektromotor 3. Die Brennkraftmaschine 2 treibt entweder die Vorderräder 4, 5 an der Vorderachse 6 oder die Hinterräder 7, 8 an der Hinterachse 9 oder sämtliche Räder des Fahrzeuges an. Der Elektromotor 3 als Bestandteil des Hybridantriebs sitzt an der Hinterachse und treibt die Hinterachsräder 7 und 8 an.

Des Weiteren ist das Kraftfahrzeug 1 mit zwei im Hinblick auf ihre Wirkung oder die Ansteuerung separaten Bremseinrichtungen 10 und 11 an der Vorderachse 6 und an der Hinterachse 9 ausgestattet, wobei die vordere, erste Bremseinrichtung 10 in der Weise ausgeführt ist, dass über das vom Fahrer zu betätigende Bremspedal ein unmittelbarer, mechanischer Durchgriff auf die Bremseinheit der vorderen Bremseinrichtung gegeben ist, wohingegen die hintere zweite Bremseinrichtung 11 als elektronisch ansteuerbare by-wire-Bremse ausgeführt ist. Bei der vorderen Bremseinrichtung 10 handelt es sich beispielsweise um eine hydraulisch betätigbare Bremse, bei der hinteren Bremseinrichtung 11 um eine elektrohydraulische Bremse oder um eine elektromotorische Bremse. Die Energieversorgung der hinteren Bremseinrichtung 11 kann gegebenenfalls unabhängig von der Energieversorgung der vorderen Bremseinrichtung 10 erfolgen.

Sämtliche Aggregate der Brennkraftmaschine, also sowohl die motorischen Antriebe als auch die Bremseinrichtungen sowie gegebenenfalls weitere Einrichtungen im Kraftfahrzeug werden über Stellsignale eines Regel- bzw. Steuergerätes 12 eingestellt. Im Regel- bzw. Steuergerät 12 werden außerdem Sensorsignale einer fahrzeugeigenen Sensorik 13 verarbeitet.

In Fig. 2 ist ein Ablaufschema für die Durchführung eines bauteilschonenden Bremsvorganges dargestellt, bei dem in bestimmten Fahrsituationen lediglich die in Fig. 1 dargestellte vordere Bremseinrichtung 10, nicht jedoch die hintere Bremseinrichtung 11 betätigt wird.

Gemäß Verfahrensschritt V1 wird zunächst abgefragt, ob sich das Fahrzeug in einem bremsenden Zustand befindet, wobei sowohl Fahrsituationen erfasst werden, in denen der Fahrer über die Betätigung des Bremspedals eine Bremsanforderung auslöst, als auch Fahrsituationen, in denen über Signale eines Fahrzeugregelsystems wie beispielsweise eines elektronischen Stabilitätsprogrammes (ESP) eine automatische bzw. selbsttätige Bremsbetätigung durchgeführt wird. Im Verfahrensschritt V1 wird die Bremsenbetätigung symbolisch anhand einer logischen Variablen bₛ abgefragt, die den aktuellen Betätigungszustand des Bremssystems repräsentiert. Die Variable bₛ steht auf dem Wert "true", falls das Bremssystem im Kraftfahrzeug betätigt wird; andernfalls steht der Wert der logischen Variablen bₛ auf dem Wert "false".

Liegt eine Betätigung der Fahrzeugbremse bzw. eine entsprechende Anforderung zur Betätigung der Fahrzeugbremse vor, so steht die logische Variable bₛ auf "true", und die Abfrage im Verfahrensschritt V1 ist erfüllt. In diesem Fall wird der Ja-Verzweigung ("Y") folgend zum nächsten Verfahrensschritt V2 fortgefahren. Andernfalls liegt keine Anforderung zur Betätigung der Fahrzeugbremse vor und es wird der Nein-Verzweigung ("N") folgend wieder zum Beginn des ersten Verfahrensschrittes V1 zurückgekehrt, woraufhin in zyklischen Abständen erneut eine Abfrage durchgeführt wird.

Im folgenden Verfahrensschritt V2 können zumindest eine, bevorzugt mehrere verschiedene Bedingungen abgefragt werden, die vorzugsweise kumulativ erfüllt sein müssen, damit ein bauteilschonender Bremsvorgang gemäß der Erfindung durchgeführt wird. Diese Bedingungen umfassen zum einen eine Abfrage bezüglich der Fahrzeuggeschwindigkeit v und zum andern eine Abfrage zum Radschlupf sₗ. Nur für den Fall, dass die Fahrzeuggeschwindigkeit v eine Fahrzeuggrenzgeschwindigkeit v_{Lim} unterschreitet und außerdem der Radschlupf sₗ ebenfalls einen zugeordneten Grenzwert s_{l,Lim} unterschreitet, wird der Ja-Verzweigung folgend zum nächsten Verfahrensschritt V4 fortgefahren, gemäß dem der erfindungsgemäße und bauteilschonende Bremsvorgang eingeleitet bzw. durchgeführt wird. Ist nur eine der genannten Bedingungen nicht erfüllt, so wird der Nein-Verzweigung folgend zum Verfahrensschritt V3 fortgefahren, gemäß dem ein konventioneller Bremsvorgang mit Betätigung sowohl der vorderen Bremseinrichtung - im Verfahrensschritt V3 als B_{F} bezeichnet - als auch der hinteren Bremseinrichtung - als B_{R} bezeichnet - durchgeführt wird. Im Verfahrensschritt V3 ist dies mit dem Begriff "active" gekennzeichnet.

Sind dagegen die im Verfahrensschritt V2 formulierten Bedingungen kumulativ erfüllt, so kann der Ja-Verzweigung folgend zum Verfahrensschritt V4 fortgefahren werden, der alternativ zum Verfahrensschritt V3 durchgeführt wird. In diesem Fall befindet sich das Fahrzeug in einem stabilen Zustand, in dem die Fahrzeuggeschwindigkeit kleiner ist als die beispielsweise bei 5 km/h oder 10 km/h liegende Grenzgeschwindigkeit s_{l,Lim} und in dem kein oder nur ein geringer Radschlupf auftritt. Als weitere Bedingung kann in Verfahrensschritt V2 formuliert werden, dass kein Fahrzeugregelsystem aktiv in das Fahrgeschehen eingreifen darf.

Im Verfahrensschritt V4 wird unter den genannten Bedingungen die vordere Bremseinrichtung B_{F} aktiviert, wohingegen die hintere Bremseinrichtung B_{R} deaktiviert bzw. gar nicht in Betrieb genommen wird. Somit erfolgt der Bremsvorgang allein über eine Betätigung der vorderen Bremse und gegebenenfalls über das Bremsmoment, welches bei Hybridantrieben über den im Generatorbetrieb laufenden elektrischen Antriebsmotor erzeugt wird. Die hintere Bremse ist dagegen nicht aktiv, so dass an dieser Bremse auch kein Bremsdruck vorgehalten werden muss.

In zyklischen Abständen wird das gesamte Schema von neuem durchlaufen und erneut überprüft, ob zum einen der Bremsvorgang weiter aufrechterhalten wird (Verfahrensschritt V1) und zum andern, ob die Bedingungen für das Vorliegen der asymetrischen Bremsbetätigung mit ausschließlicher Bremsbeaufschlagung der vorderen Bremse B_{F} (Verfahrensschritt 2) noch bzw. wieder vorliegen.

## Patentansprüche

1. Fahrzeug mit einem Bremssystem, das mindestens eine erste Bremseinrichtung (10) mit unmittelbarem Durchgriff des Bremspedals auf eine Bremseinheit der ersten Bremseinrichtung (10) und mindestens eine zweite Bremseinrichtung (11) aufweist, wobei für den Fall, dass eine Fahrzeug-Systemgröße (v, sₗ) einen zugeordneten Grenzwert (v_{Lim}, s_{l,Lim}) nicht überschreitet und eine Bremsbetätigung (bₛ) vorliegt ausschließlich die erste, unmittelbar betätigbare Bremseinrichtung (10) beaufschlagt wird und die zweite Bremseinrichtung (11) unbetätigt bleibt, wobei die erste, unmittelbar betätigbare Bremseinrichtung (10) und die zweite Bremseinrichtung (11) an unterschiedlichen Fahrzeugachsen (6, 9) wirksam sind, **dadurch gekennzeichnet, dass** das Fahrzeug mit einem Hybridantrieb mit einem Verbrennungsmotor und einem Elektromotor (3) ausgestattet ist, wobei der Elektromotor (3) an der gleichen Fahrzeugachse (9) wie die zweite Bremseinrichtung (11) wirksam ist.

2. Fahrzeug nach Anspruch 1,
**dadurch gekennzeichnet, dass** die erste Bremseinrichtung (10) auf die Vorderachse (6) und die zweite Bremseinrichtung auf die Hinterachse (9) wirkt.

3. Fahrzeug nach Anspruch 1 oder 2,
**dadurch gekennzeichnet, dass** die zweite Bremseinrichtung (11) als elektronisch ansteuerbare Bremse ausgeführt ist.

4. Fahrzeug nach Anspruch 3,
**dadurch gekennzeichnet, dass** die zweite, elektronisch ansteuerbare Bremseinrichtung (11) elektromotorisch ausgeführt ist und eine über einen Elektromotor zu betätigende Bremseinheit aufweist.

5. Fahrzeug nach Anspruch 3,
**dadurch gekennzeichnet, dass** die zweite, elektronisch ansteuerbare Bremseinrichtung (11) als hydraulische Bremse ausgeführt ist, insbesondere als elektrohydraulische Bremse.

6. Fahrzeug nach einem der Ansprüche 1 bis 5,
**dadurch gekennzeichnet, dass** die Fahrzeug-Systemgröße die Fahrzeugggeschwindigkeit (v) ist, die eine Fahrzeuggrenzgeschwindigkeit (v_{Lim}) nicht überschreiten darf.

7. Fahrzeug nach einem der Ansprüche 1 bis 6,
**dadurch gekennzeichnet, dass** die zweite Bremseinrichtung (11) zusätzlich in Betrieb genommen wird, wenn ein Fahrzeugregelsystem aktiv ist.

8. Fahrzeug nach einem der Ansprüche 1 bis 7,
**dadurch gekennzeichnet, dass** die zweite Bremseinrichtung (11) zusätzlich in Betrieb genommen wird, wenn der Schlupf (sₗ) an einem Fahrzeugrad einen Grenzwert (s_{l,Lim}) erreicht.

9. Fahrzeug nach einem der Ansprüche 1 bis 8,
**dadurch gekennzeichnet, dass** die zweite Bremseinrichtung (11) zusätzlich in Betrieb genommen wird, wenn innerhalb eines definierten Zeitraums ein Betätigungswechsel von Beschleunigungs- zu Bremspedal stattfindet.

10. Fahrzeug nach einem der Ansprüche 1 bis 9,
**dadurch gekennzeichnet, dass** die ausschließliche Betätigung der ersten Bremseinrichtung (10) bei selbsttätiger Staufolgefahrt durchgeführt wird.

11. Fahrzeug nach einem der Ansprüche 1 bis 10,
**dadurch gekennzeichnet, dass** die ausschließliche Betätigung der ersten Bremseinrichtung (10) ausschließlich bei Vorwärtsfahrt durchgeführt wird.

12. Fahrzeug nach einem der Ansprüche 1 bis 10,
**dadurch gekennzeichnet, dass** die ausschließliche Betätigung der ersten Bremseinrichtung (10) bei Vorwärtsfahrt und bei Rückwärtsfahrt durchgeführt wird.

13. Fahrzeug nach einem der Ansprüche 1 bis 12,
**dadurch gekennzeichnet, dass** die ausschließliche Betätigung der ersten Bremseinrichtung (10) nur durchgeführt wird, wenn der Beladungszustand unterhalb eines Grenzwertes liegt.

14. Fahrzeug nach einem der Ansprüche 1 bis 13,
**dadurch gekennzeichnet, dass** die ausschließliche Betätigung der ersten Bremseinrichtung (10) nur durchgeführt wird, wenn die Neigung der Fahrbahn unterhalb eines Grenzwertes liegt.

## Claims

1. Vehicle having a brake system which has at least one first brake device (10), which has a direct link from the brake pedal to a brake unit of the first brake device (10), and at least one second brake device (11), wherein, in the event that a vehicle system variable (v, s_{I}) does not overshoot an associated limit value (v_{Lim}, s_{I,Lim}) and a brake actuation (bₛ) is present, only the first, directly actuatable brake device (10) is acted on and the second brake device (11) remains non-actuated, wherein the first, directly actuatable brake device (10) and the second brake device (11) act on different vehicle axles (6, 9), **characterized in that** the vehicle is equipped with a hybrid drive with an internal combustion engine and an electric motor (3), wherein the electric motor (3) acts on the same vehicle axle (9) as the second brake device (11) .

2. Vehicle according to Claim 1,
**characterized in that** the first brake device (10) acts on the front axle (6) and the second brake device acts on the rear axle (9).

3. Vehicle according to Claim 1 or 2,
**characterized in that** the second brake device (11) is designed as an electronically activatable brake.

4. Vehicle according to Claim 3,
**characterized in that** the second, electronically activatable brake device (11) is of electromotive design and has a brake unit designed for actuation by means of an electric motor.

5. Vehicle according to Claim 3,
**characterized in that** the second, electronically activatable brake device (11) is designed as a hydraulic brake, in particular as an electrohydraulic brake.

6. Vehicle according to any of Claims 1 to 5,
**characterized in that** the vehicle system variable is the vehicle speed (v), which must not overshoot a vehicle limit speed (v_{Lim}).

7. Vehicle according to any of Claims 1 to 6,
**characterized in that** the second brake device (11) is additionally operated if a vehicle control system is active.

8. Vehicle according to any of Claims 1 to 7,
**characterized in that** the second brake device (11) is additionally operated if the slip (s_{I}) at a vehicle wheel reaches a limit value (s_{I,Lim}).

9. Vehicle according to any of Claims 1 to 8,
**characterized in that** the second brake device (11) is additionally operated if a changeover in actuation from accelerator pedal to brake pedal occurs within a defined time period.

10. Vehicle according to any of Claims 1 to 9,
**characterized in that** the exclusive actuation of the first brake device (10) is performed during travel in an automated traffic jam following mode.

11. Vehicle according to any of Claims 1 to 10,
**characterized in that** the exclusive actuation of the first brake device (10) is performed exclusively during forward travel.

12. Vehicle according to any of Claims 1 to 10,
**characterized in that** the exclusive actuation of the first brake device (10) is performed during forward travel and during reverse travel.

13. Vehicle according to any of Claims 1 to 12,
**characterized in that** the exclusive actuation of the first brake device (10) is performed only if the loading state lies below a limit value.

14. Vehicle according to any of Claims 1 to 13,
**characterized in that** the exclusive actuation of the first brake device (10) is performed only if the inclination of the roadway lies below a limit value.

## Revendications

1. Véhicule comportant un système de freinage qui comprend au moins un premier dispositif de freinage (10) avec action directe de la pédale de frein sur une unité de freinage du premier dispositif de freinage (10) et au moins un deuxième dispositif de freinage (11), dans lequel, dans le cas où une grandeur de système de véhicule (v, s_{I}) ne dépasse pas une valeur limite (v_{Lim}, S_{I,Lim}) associée et un actionnement de frein (bₛ) est présent, le premier dispositif de freinage (10) pouvant être actionné directement est sollicité exclusivement et le deuxième dispositif de freinage (11) demeure non actionné, dans lequel le premier dispositif de freinage (10) pouvant être actionné directement et le deuxième dispositif de freinage (11) agissent sur différents essieux de véhicule (6, 9), **caractérisé en ce que** le véhicule est équipé d'un entraînement hybride comprenant un moteur à combustion interne et un moteur électrique (3), le moteur électrique (3) agissant sur le même essieu de véhicule (9) que le deuxième dispositif de freinage (11).

2. Véhicule selon la revendication 1,
**caractérisé en ce que** le premier dispositif de freinage (10) agit sur l'essieu avant (6) et le deuxième dispositif de freinage agit sur l'essieu arrière (9).

3. Véhicule selon la revendication 1 ou 2,
**caractérisé en ce que** le deuxième dispositif de freinage (11) est réalisé sous forme de frein pouvant être commandé électroniquement.

4. Véhicule selon la revendication 3,
**caractérisé en ce que** le deuxième dispositif de freinage (11) pouvant être commandé électroniquement est réalisé de manière électromotorisée et comprend une unité de freinage à actionner par le biais d'un moteur électrique.

5. Véhicule selon la revendication 3,
**caractérisé en ce que** le deuxième dispositif de freinage (11) pouvant être commandé électroniquement est réalisé sous forme de frein hydraulique, en particulier sous forme de frein électrohydraulique.

6. Véhicule selon l'une des revendications 1 à 5,
**caractérisé en ce que** la grandeur de système de véhicule est la vitesse de véhicule (v), qui ne peut pas dépasser une vitesse limite de véhicule (v_{Lim}).

7. Véhicule selon l'une des revendications 1 à 6,
**caractérisé en ce que** le deuxième dispositif de freinage (11) est en outre mis en service lorsqu'un système de régulation de véhicule est actif.

8. Véhicule selon l'une des revendications 1 à 7,
**caractérisé en ce que** le deuxième dispositif de freinage (11) est en outre mis en service lorsque le patinage (s_{I}) au niveau d'une roue de véhicule atteint une valeur limite (s_{I,Lim}).

9. Véhicule selon l'une des revendications 1 à 8,
**caractérisé en ce que** le deuxième dispositif de freinage (11) est en outre mis en service lorsqu'un changement d'actionnement de la pédale d'accélération à la pédale de frein a lieu pendant une période définie.

10. Véhicule selon l'une des revendications 1 à 9,
**caractérisé en ce que** l'actionnement exclusif du premier dispositif de freinage (10) est effectué en cas de conduite automatique dans les embouteillages.

11. Véhicule selon l'une des revendications 1 à 10,
**caractérisé en ce que** l'actionnement exclusif du premier dispositif de freinage (10) est effectué exclusivement en cas de marche avant.

12. Véhicule selon l'une des revendications 1 à 10,
**caractérisé en ce que** l'actionnement exclusif du premier dispositif de freinage (10) est effectué en cas de marche avant et en cas de marche arrière.

13. Véhicule selon l'une des revendications 1 à 12,
**caractérisé en ce que** l'actionnement exclusif du premier dispositif de freinage (10) n'est effectué que lorsque l'état de chargement est inférieur à une valeur limite.

14. Véhicule selon l'une des revendications 1 à 13,
**caractérisé en ce que** l'actionnement exclusif du premier dispositif de freinage (10) n'est effectué que lorsque l'inclinaison de la voie de circulation est inférieure à une valeur limite.
